Europäisches Patentamt

**European Patent Office**

Office européen des brevets

(19)

(11) Numéro de publication: **0 288 344**
**B1**

(12)                    FASCICULE DE BREVET EUROPEEN

(45) Date de publication du fascicule du brevet:
08.08.90

(51) Int. Cl.⁵: **C25C 1/20**

(21) Numéro de dépôt: **88400716.2**

(22) Date de dépôt: **24.03.88**

(54) Procédé électrochimique pour récupérer le rhodium métallique à partir de solutions aqueuses de catalyseurs usagés.

(30) Priorité: **25.03.87 FR 8704129**

(43) Date de publication de la demande:
**26.10.88 Bulletin 88/43**

(45) Mention de la délivrance du brevet:
**08.08.90 Bulletin 90/32**

(84) Etats contractants désignés:
**AT BE CH DE ES FR GB GR IT LI LU NL SE**

(56) Documents cités:
**WO-A-86/06418**

(73) Titulaire: **RHONE-POULENC SANTE, 20, avenue Raymond Aron, F-92160 Antony(FR)**

(72) Inventeur: **Caude, Marie-Céline, 7 rue de la Division Leclerc, F-91700 Villiers Sur Orge(FR)**
Inventeur: **Morel, Didier, 9 Lotissement Bellevue, F-03310 Neris Les Bains(FR)**
Inventeur: **Pulicani, Jean-Pierre, 7 bis Villa St Georges, F-92160 Antony(FR)**

(74) Mandataire: **Le Pennec, Magali et al, RHONE-POULENC SANTE, Service Brevets, 20 Avenue Raymond Aron, F-92165 Antony Cédex(FR)**

## Description

La présente invention concerne un procédé électrochimique pour récupérer le rhodium sous forme métallique à partir de solutions aqueuses de catalyseurs usagés.

Le rhodium est un métal qui est utilisé comme catalyseur, généralement sous forme de sels ou de complexes, pour réaliser de nombreuses synthèses en chimie organique.

Le rhodium est un métal relativement rare dont le coût est élevé. Il est particulièrement important de pouvoir le récupérer lorsque le catalyseur a perdu de son efficacité afin de pouvoir le recycler.

Il est connu de récupérer le rhodium à partir de complexes solubles en milieu organique. Généralement, les procédés connus consistent à détruire le catalyseur (oxydation, attaque acide ou alcaline, déplacement par un ligand plus fort, combustion) pour obtenir une forme récupérable (sels minéraux de rhodium solubles ou insolubles, complexes de polarité suffisante) à partir de laquelle le rhodium est récupéré (réduction électrochimique, filtration, combustion, extraction liquide/liquide, fixation sur support).

Cependant, dans le cas de complexes organiques du rhodium, la réduction électrochimique ne conduit pas au rhodium métallique mais à des dérivés dans lesquels le rhodium est à l'état d'oxydation "O" (voir, par exemple, E. Markrlik et al, J. Organomet. Chem., 1977, 142 (1), 95-103). Il est toutefois possible d'obtenir le dépôt de rhodium métallique sur une électrode en utilisant des sels minéraux ou des complexes minéraux du rhodium en présence d'électrolytes judicieusement choisis (voir, par exemple, Chem. Abstr. 1984, 100, 147437 q).

Il est connu d'utiliser des systèmes catalytiques hydrosolubles constitués d'un dérivé du rhodium, minéral ou organométallique et d'une phosphine soluble dans l'eau (sel de sodium de triphénylphosphinetrisulfonée ou TPPTS Na) pour réaliser des réactions chimiques. Par exemple, en utilisant un tel catalyseur, peut être réalisée l'addition sélective d'un composé ayant un groupement méthylène actif, tel qu'un β-cétoester, sur un diène conjugué terminal (brevet européen EP 44771), l'addition d'une amine secondaire cyclique sur un diène conjugué terminal (brevet européen EP 185 559) ou bien l'alcoylation sélective de phénols (demande de brevet européen EP 161 132) ou bien encore l'hydroformylation des oléfines (FR 2 349 562). Généralement, en fin de réaction, la phase aqueuse, dont le pH est voisin de la neutralité, est constituée essentiellement de rhodium sous forme de complexes organométalliques, de phosphines sulfonées et de leurs produits de dégradation (oxydes de phosphine), d'eau, d'alcool (méthanol) utilisé comme co-solvant et de produits organiques (réactifs et produits de la réaction). Bien que le catalyseur puisse être recyclé, celui-ci doit être régénéré après un nombre déterminé d'opérations.

Il a maintenant été trouvé, et c'est ce qui fait l'objet de la présente invention, que l'on peut récupérer le rhodium sous forme métallique par réduction électrochimique d'une solution aqueuse d'un système catalytique hydrosoluble, contenant essentiellement un complexe du rhodium, minéral ou organométallique, une phosphine sulphonée et ses dérivés oxydés, des produits organiques résiduels, des solvants et des sels minéraux ayant subi préalablement un traitement approprié d'oxydation et d'acidification.

Le traitement oxydant a pour objet de transformer le phosphore résiduel trivalent en phosphore pentavalent et d'oxyder le rhodium monovalent en rhodium trivalent, l'acidification étant nécessaire pour que le rhodium soit sous une forme électro-réductible.

Il est particulièrement avantageux d'effectuer le pré-traitement sur une solution aqueuse de catalyseur usagé préalablement concentrée afin de pouvoir disposer d'une solution ayant une concentration plus élevée en rhodium de laquelle les solvants organiques et les produits de la réaction et les réactifs résiduels ont été éliminés. Généralement, on utilise une solution concentrée dont le volume représente environ le tiers du volume initial de façon à avoir une concentration en rhodium comprise entre 1 et 5 g/litre. La concentration est effectuée par distillation éventuellement sous pression réduite.

L'oxydation de la solution de catalyseur usagé, éventuellement concentrée, est effectuée au moyen d'un agent ayant un fort pouvoir oxydant choisi de préférence parmi les hypochlorites et chlorates de métaux alcalins, tels que l'eau de Javel, le chlorate de sodium ou de potassium, en opérant à une température comprise entre 20°C et la température de reflux du mélange réactionnel. De préférence, l'oxydation est effectuée à la température de reflux et est complète après une durée pouvant aller de 1 à 4 heures. L'oxydation peut éventuellement être réalisée au moyen d'eau oxygénée.

L'acidification est réalisée au moyen d'un acide fort de telle manière que le pH de la solution finale soit inférieur à 3 et, de préférence compris entre 0 et 1. Il est particulièrement avantageux d'utiliser un acide minéral fort choisi parmi les acides chlorhydrique, sulfurique, nitrique et phosphorique. De préférence, l'acidification est effectuée à la température de reflux du mélange réactionnel, le chauffage étant poursuivi pendant 1 à 4 heures.

Pour la mise en oeuvre de l'opération de pré-traitement de la solution aqueuse du système catalytique usagé, il est indifférent que l'acidification suive ou précède l'oxydation.

La solution qui est obtenue après les traitements d'oxydation et d'acidification est directement électrolysable.

L'électrolyse peut être réalisée en continu ou en discontinu.

L'électrolyseur est constitué essentiellement d'une cathode et d'une anode et éventuellement d'un diaphragme séparant les compartiments cathodique et anodique. L'électrolyseur peut comporter en outre une électrode de référence telle qu'une électrode au calomel saturé.

Généralement, la cathode est constituée par un matériau conducteur de l'électricité dont le point de fusion doit être suffisamment bas pour permettre la récupération du rhodium et qui doit être résistant à l'agressivité du milieu. Il est particulièrement avantageux d'utiliser une cathode en acier inoxydable, en mercure, en cuivre ou en plomb. De préférence, on utilise une cathode en cuivre ou en plomb.

Généralement, l'anode est constituée par un matériau conducteur de l'électricité inattaquable dans les conditions de l'électrolyse. Il est particulièrement avantageux d'utiliser une anode en graphite.

Lorsqu'un diaphragme séparateur est utilisé, celui-ci est avantageusement constitué par un matériau poreux tel que par exemple une plaque de verre fritté ou une membrane échangeuse d'ions, de préférence, échangeuse de cations. Lorsqu'on utilise un diaphragme séparateur, le compartiment anodique contient un électrolyte qui, de préférence, est l'acide utilisé pour effectuer l'acidification lors de l'opération de pré-traitement.

Lorsque l'électrolyseur ne comporte pas d'électrode de référence, la densité de courant au début de l'électrolyse est déterminée de telle manière que la réduction du rhodium soit maximale tout en limitant la réduction des protons présents dans le milieu fortement acide. Généralement, la densité de courant est comprise entre 0,5 et 2 A/dm2. Du fait de la réduction simultanée d'une partie des protons présents dans le milieu, le rendement électrique n'est pas quantitatif. Généralement, l'électrolyse est arrêtée après le passage de 50 Faradays par atome-gramme de rhodium.

Lorsque l'électrolyseur comporte une électrode de référence (électrode au calomel saturé), le potentiel imposé à la cathode est choisi de telle manière que la réduction du rhodium soit maximale tout en limitant la réduction des protons présents dans le milieu fortement acide. Généralement, le potentiel de la cathode est compris entre -0,25 et -0,55 volt par rapport à l'électrode de référence.

Pour la mise en oeuvre du procédé selon l'invention, on utilise généralement un électrolyseur dans lequel l'anode, la cathode et le diaphragme séparateur sont dans des plans parallèles verticaux. Cependant, lorsqu'une cathode de mercure est utilisée, l'anode, la cathode et le diaphragme séparateur sont dans des plans parallèles horizontaux.

Il est possible d'utiliser un électrolyseur comportant plusieurs anodes et cathodes disposées alternativement et reliées à l'alimentation électrique par des circuits parallèles.

Par ailleurs, il est possible d'associer en série plusieurs électrolyseurs élémentaires.

Il est particulièrement avantageux d'agiter la solution à électrolyser soit au moyen d'un agitateur mécanique ou magnétique soit par circulation assurée par une pompe.

Il est aussi possible d'utiliser des électrolyseurs auxquels sont adjoints des dispositifs annexes tels que des échangeurs de chaleur, des vases d'expansion ou des appareils de mesure de la température ou du pH.

Lorsque l'électrolyse est terminée, la ou les cathodes sont retirées de la solution puis rincées à l'eau et éventuellement avec un solvant organique tel que le méthanol ou l'acétone et enfin séchées.

Selon les capacités d'adhérence du dépôt sur la cathode, celui-ci est récupéré par grattage mécanique ou bien détaché sous l'action des ultra-sons en milieu aqueux.

Généralement, le rhodium initialement présent dans la solution est récupéré avec un rendement supérieur à 80 % sous une forme solide titrant plus de 50 % (p/p) en rhodium.

Le rhodium métallique peut être récupéré soit par fusion de la cathode soit par fusion du dépôt obtenu après grattage de la cathode, la cathode pouvant dans ce dernier cas être réutilisée.

Le rhodium sous forme métallique ainsi obtenu peut être affiné, selon les techniques connues.

De cette manière, il n'est pas nécessaire d'utiliser un réducteur spécifique habituellement utilisé pour précipiter le rhodium tel qu'un borohydrure, le zinc ou le fer.

Le rhodium obtenu selon le procédé de la présente invention peut être éventuellement transformé en un sel (chlorure, bromure, sulfate, nitrate) utilisable pour préparer un complexe utile comme catalyseur en synthèse organique.

Les exemples suivants, donnés à titre non limitatif, illustrent la présente invention.

### EXEMPLE 1

#### 1 - Pré-traitement

Dans un erlenmeyer de 100 cm3, on introduit :
- 10 cm3 d'une solution de catalyseur usagé contenant :
. complexe rhodium-triphénylphosphinetrisulfonée (2,3 g/litre de rhodium environ)
. triphénylphosphinetrisulfonée, sel de sodium et produits d'oxydation (40,9 % en extrait sec)
. produits organiques (1,4 %)
- 25 cm3 d'une solution aqueuse d'hypochlorite de sodium à 15 % (d = 1,22)

On chauffe au bain-marie à 80-82°C pendant 1 heure 20 minutes tout en agitant.

On ajoute alors 1,5 cm3 d'acide chlorhydrique à 37 % (d = 1,19).

On maintient le chauffage et l'agitation pendant 1 heure 45 minutes.

Le précipité qui se forme (0,152 g) est séparé de la solution par filtration sur verre fritté. Le précipité contient 0,064 % (p/p) de rhodium qui est récupéré par combustion selon les techniques connues.

#### 2 - Electrolyse

On introduit 25 cm3 de la solution pré-traitée dans le compartiment cathodique d'une cellule d'électrolyse dont les deux compartiments sont séparés par une membrane cationique.

Dans le compartiment cathodique, on introduit une cathode de cuivre sous forme d'un disque de 2,4 cm de diamètre. Le compartiment anodique contient 25 cm3 d'acide chlorhydrique N ; on y introduit une grille de platine de même dimension. On fixe à -0,3 volt le potentiel de la cathode par rapport à une électrode de référence au calomel saturé. La solution est agitée. Après le passage de 359 coulombs, l'électrolyse est arrêtée. La cathode de cuivre est recouverte d'un dépôt gris qui est récupéré par grattage, rincé à l'eau et à l'acétone puis séché.

## 3 - Résultats

La solution initiale contenait 16,25 mg de rhodium et la solution finale après électrolyse en contient 2 mg. Le taux de récupération est de 88 %.

Le dépôt récupéré contient 46 % de rhodium et 39 % de cuivre.

## EXEMPLE 2

### 1 - Pré-traitement

Dans un erlenmeyer de 1000 cm3, on introduit :
- 100 cm3 de solution de catalyseur usagé identique à celle utilisée dans l'exemple 1, et
- 300 cm3 d'hypochlorite de sodium à 15 %.

On agite et maintient au bain-marie à 90-94°C pendant 1 heure 35 minutes. On ajoute 15 cm3 d'acide chlorhydrique à 37 % (d = 1,19). On maintient l'agitation et le chauffage pendant 90 minutes. On recueille par filtration 0,508 g de précipité rougeâtre pâteux contenant 0,3 % de rhodium qui est récupéré par combustion.

Le volume du filtrat est amené à 500 cm3 par addition d'eau.

### 2 - Electrolyse

On introduit 250 cm3 de solution pré-traitée dans une cellule d'électrolyse sans diaphragme séparateur. On plonge une cathode de cuivre et 2 anodes de graphite d'une surface de 25 cm2 de part et d'autre et à égale distance de la cathode. La tension aux bornes du circuit est fixée à 2,66-2,9 volts. La solution est agitée en permanence. Après passage de 2530 coulombs, l'électrolyse est arrêtée. La cathode de cuivre est recouverte d'un dépôt gris à forte teneur en rhodium.

### 3 - Résultats

La solution initiale contenait 184 mg de rhodium et la solution finale, après électrolyse, en contient 25 mg. Le taux de récupération est de 86 %.

## Revendications

1 - Procédé pour récupérer le rhodium sous forme métallique à partir d'une solution aqueuse de catalyseur usagé contenant essentiellement un complexe du rhodium, une phosphine sulfonée et ses dérivés oxydés, des produits organiques résiduels, des solvants et des sels minéraux caractérisé en ce que :

    a) on traite la solution aqueuse par un agent oxydant et par un acide fort,

    b) on soumet la solution ainsi obtenue à une réduction électrolytique, puis

    c) on sépare de la cathode le rhodium métallique déposé.

2 - Procédé selon la revendication 1 caractérisé en ce que la solution aqueuse du système catalytique est concentrée préalablement au traitement d'oxydation et d'acidification.

3 - Procédé selon l'une des revendications 1 ou 2 caractérisé en ce que l'oxydation suivie ou précédée de l'acidification est réalisée au moyen d'un oxydant choisi parmi les hypochlorites de métaux alcalins et les chlorates de métaux alcalins.

4 - Procédé selon l'une des revendications 1 ou 2 caractérisé en ce que l'acidification précédée ou suivie de l'oxydation est réalisée au moyen d'un acide minéral fort choisi parmi les acides chlorhydrique, sulfurique, nitrique ou phosphorique de façon à amener le pH inférieur à 3.

5 - Procédé selon l'une des revendications 1 ou 2 caractérisé en ce que la réduction électrolytique est effectuée dans un électrolyseur comportant une cathode, une anode et éventuellement une électrode de référence et/ou un diaphragme séparateur des compartiments anodique et cathodique, la cathode étant constituée d'un matériau conducteur de l'électricité, de point de fusion peu élevé et résistant à la corrosion du milieu choisi parmi l'acier inoxydable, le mercure, le cuivre et le plomb, l'anode étant constituée d'un matériau conducteur de l'électricité et inattaquable dans les conditions de l'électrolyse tel que le graphite, l'électrode de référence étant une électrode au calomel saturé et le diaphragme séparateur étant un matériau poreux choisi parmi le verre fritté et les membranes échangeuses d'ions.

6 - Procédé selon la revendication 5 caractérisé en ce que, lorsque l'on opère en absence d'électrode de référence, la densité de courant au début de l'électrolyse est comprise entre 0,5 et 2 A/dm2.

7 - Procédé selon la revendication 5 caractérisé en ce que, lorsque l'on opère en présence d'une électrode de référence, le potentiel de la cathode est compris entre -0,25 et -0,55 volt par rapport à l'électrode de référence.

8 - Procédé selon l'une des revendications 5, 6 ou 7 caractérisé en ce que, lorsque l'on opère en présence d'un diaphragme séparateur, le compartiment anodique contient un électrolyte choisi parmi les acides utilisés lors de l'opération d'acidification.

9 - Procédé selon la revendication 1 caractérisé en ce que le rhodium métallique est obtenu sur la cathode sous forme d'un dépôt qui est séparé par grattage mécanique ou par action des ultra-sons.

## Patentansprüche

1. Verfahren zur Rückgewinnung von Rhodium in metallischer Form aus einer verbrauchten, wässrigen, katalytischen Lösung, die im wesentlichen einen Rhodiumkomplex, ein sulfoniertes Phosphin, und seine oxidierten Derivate, organische Rückstandsprodukte, Lösungsmittel und anorganische Salze enthält, dadurch gekennzeichnet, daß man

    a) die wässrige Lösung mit einem Oxidationsmittel und einer starken Säure behandelt,

    b) die so erhaltene Lösung einer elektrolytischen Reduktion unterwirft und dann

    c) von der Kathode das abgelagerte metallische Rhodium entfernt.

2. Verfahren nach Anspruch 1, dadurch gekennzeichnet, daß die wässrige Lösung des katalytischen Systems vor der Oxydations- und Säurebehandlung konzentriert wird.

3. Verfahren nach einem der Ansprüche 1 oder 2, dadurch gekennzeichnet, daß die der Säurebehandlung folgende oder vorausgehende Oxydation mit einem Oxydationsmittel durchgeführt wird, das ausgewählt ist aus Alkalimetallhypochloriten und Alkalimetallchloraten.

4. Verfahren nach einem der Ansprüche 1 oder 2, dadurch gekennzeichnet, daß die der Oxydation folgende oder vorausgehende Säurebehandlung mit einer starken anorganischen Säure ausgewählt aus Chlorwasserstoff-, Schwefel-, Salpeter- oder Phosphorsäure durchgeführt wird, um den pH-Wert unter 3 zu bringen.

5. Verfahren nach einem der Ansprüche 1 oder 2, dadurch gekennzeichnet, daß die elektrolytische Reduktion in einem Elektrolyser mit einer Kathode, einer Anode und gegebenenfalls einer Bezugselektrode und/oder einer den Anoden- und Kathodenraum trennenden Membran durchgeführt wird, wobei die Kathode aus einem elektrisch leitenden Material mit niedrigem Schmelzpunkt und einer Korrosionsbeständigkeit gegenüber dem Milieu, ausgewählt aus nichtoxydierendem Stahl, Quecksilber, Kupfer und Blei, die Anode aus einem elektrisch leitenden und unter den Elektrolysebedingungen beständigen Material, wie Graphit, die Bezugselektrode aus gesättigtem Kalomel und die Trennmembran aus einem porösen Material, ausgewählt aus Sinterglas und Ionenaustauschermembranen bestehen.

6. Verfahren nach Anspruch 5, dadurch gekennzeichnet, daß beim Arbeiten ohne Bezugselektrode die Stromdichte zu Beginn der Elektrolyse zwischen 0,5 und 2 A/dm² beträgt.

7. Verfahren nach Anspruch 5, dadurch gekennzeichnet, daß beim Arbeiten mit einer Bezugselektrode das Potential der Kathode gegenüber der Bezugselektrode zwischen −0,25 und −0,55 Volt beträgt.

8. Verfahren nach einem der Ansprüche 5, 6 oder 7, dadurch gekennzeichnet, daß beim Arbeiten mit einer Trennmembran der Anodenraum einen Elektrolyten, ausgewählt aus den in der Säurebehandlungsstufe eingesetzten Säuren enthält.

9. Verfahren nach Anspruch 1, dadurch gekennzeichnet, daß das metallische Rhodium an der Kathode in Form einer Ablagerung erhalten wird, die durch mechanisches Abschaben oder mittels Ultraschall entfernt wird.

**Claims**

1. Process for recovering rhodium in metallic form from an aqueous solution of spent catalyst containing essentially a rhodium complex, a sulphonated phosphine and its oxidized derivatives, residual organic products, solvents and inorganic salts, characterized in that:
    a) the aqueous solution is treated with an oxidizing agent and with a strong acid,
    b) the solution thus obtained is subjected to an electrolytic reduction, and then
    c) the metallic rhodium deposited is seperated from the cathode.

2. Process according to claim 1, characterized in that the aqueous solution of the catalyst system is concentrated before the oxidation and acidification treatment.

3. Process according to either of claims 1 and 2, characterized in that the oxidation followed or preceded by acidification is performed by means of an oxidizing agent chosen from alkali metal hypochlorites and alkali metal chlorates.

4. Process according to either of claims 1 and 2, characterized in that the acidification preceded or followed by oxidation is performed by means of a strong inorganic acid chosen from hydrochloric, sulphuric, nitric or phosphoric acids so as to bring the pH below 3.

5. Process according to either of claims 1 and 2, characterized in that the electrolytic reduction is performed in an electrolyser comprising a cathode, an anode and if desired a reference electrode and/or a separator diaphragm for the anode and cathode compartments, the cathode consisting of an electrically conductive material of relatively low melting point and resistant to corrosion by the medium, chosen from stainless steel, mercury, copper and lead, the anode consisting of an electrically conductive material incapable of being attacked under the electrolysis conditions, such as graphite, the reference electrode being a saturated calomel electrode and the separator diaphragm being a porous material chosen from sintered glass and ion exchange membranes.

6. Process according to claim 5, characterized in that, when the operation is carried out in the absence of a reference electrode, the current density at the beginning of the electrolysis is between 0.5 and 2 A/dm².

7. Process according to claim 5, characterized in that, when the operation is carried out in the presence of a reference electrode, the cathode potential is between −0.25 and −0.55 volt relative to the reference electrode.

8. Process according to one of claims 5, 6 or 7, characterized in that, when the operation is carried out in the presence of a separator diaphragm, the anode compartment contains an electrolyte chosen from the acids employed during the acidification operation.

9. Process according to claim 1, characterized in that metallic rhodium is obtained on the cathode in the form of a deposit which is separated by mechanical scraping or by the action of ultrasonics.